(19) Europäisches Patentamt / European Patent Office / Office européen des brevets

(11) **EP 2 834 541 B1**

(12) **FASCICULE DE BREVET EUROPEEN**

(45) Date de publication et mention
de la délivrance du brevet:
**12.06.2019 Bulletin 2019/24**

(21) Numéro de dépôt: **13715350.8**

(22) Date de dépôt: **19.03.2013**

(51) Int Cl.:
*F16H 61/04* *(2006.01)*    *F16H 63/50* *(2006.01)*

(86) Numéro de dépôt international:
**PCT/FR2013/050590**

(87) Numéro de publication internationale:
**WO 2013/150205 (10.10.2013 Gazette 2013/41)**

(54) **PROCEDE DE SYNCHRONISATION D'UN PIGNON SUR UN ARBRE DE BOITE DE VITESSES**

VERFAHREN ZUM SYNCHRONISIEREN EINES GETRIEBES AN EINER GETRIEBEWELLE

METHOD FOR SYNCHRONIZING A GEAR ON A GEARBOX SHAFT

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **03.04.2012 FR 1253053**

(43) Date de publication de la demande:
**11.02.2015 Bulletin 2015/07**

(73) Titulaire: **Renault S.A.S.
92100 Boulogne-Billancourt (FR)**

(72) Inventeur: **MALOUM, Abdelmalek
F-94550 Chevilly Larue (FR)**

(56) Documents cités:
**EP-A1- 2 138 371     DE-A1-102006 019 239
FR-A1- 2 954 441**

## Description

La présente invention se rapporte au domaine de la commande des passages de vitesses sur une boîte de vitesses.

Plus précisément, elle a pour objet un procédé de synchronisation d'un pignon sur un arbre de boîte de vitesses de véhicule à arbres parallèles comportant au moins un arbre primaire relié à une source d'énergie, un arbre secondaire entraîné par l'arbre primaire pour transmettre le couple moteur aux roues sur plusieurs rapports de transmission, et au moins un moyen de couplage d'un pignon sur son arbre pour engager un rapport de transmission sans organes de synchronisation mécanique. Un tel procédé, comprenant les caractéristiques du préambule de la revendication 1, est connu de DE 10 2006 019 239 A1.

Cette invention d'applique sur toute transmission à arbres parallèles, dans laquelle des changements de rapport en rupture de couple s'effectuent par déplacement d'un moyen de couplage entre deux pignons de vitesses libres en rotation sur un arbre lié aux roues du véhicule.

Elle trouve une application non limitative sur une transmission hybride pour véhicule automobile muni d'un moteur thermique et d'une machine électrique d'entraînement, comportant deux arbres primaires concentriques portant chacun au moins un pignon de descente sur un arbre secondaire relié aux roues du véhicule et un premier moyen de couplage entre deux arbres primaires pouvant occuper trois positions, dans lesquelles : le moteur thermique est découplé de la chaîne cinématique reliant la machine électrique aux roues, il entraîne les roues avec ou sans l'appoint de la machine électrique, ou il est couplé à la machine électrique pour additionner leurs couples.

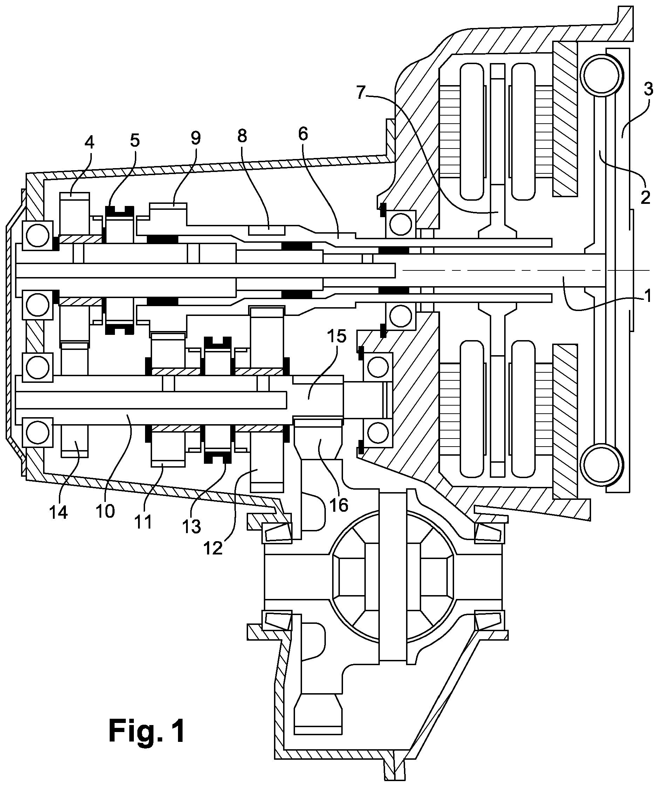

La figure 1 décrit un exemple non limitatif de transmission hybride relevant de ce principe d'architecture. Cette transmission comporte un arbre primaire plein 1 connecté directement par l'intermédiaire d'un système de filtration (moyeu amortisseur, « damper », double volant ou autre) 2, au volant d'inertie 3 d'un moteur thermique (non représenté). L'arbre plein 1 porte un pignon fou 4 pouvant être connecté avec celui-ci par un premier système de couplage 5 (crabot, synchroniseur, ou autre type de coupleur progressif ou non). Un arbre primaire creux 6 est relié au rotor d'une machine électrique 7. L'arbre creux 6 porte deux pignons fixes 8, 9. Il peut être relié à l'arbre primaire plein 1 par l'intermédiaire du système de couplage 5. Un arbre secondaire 10 porte deux pignons fous 11 et 12. On peut relier les pignons fous 11, 12 à l'arbre primaire par l'intermédiaire d'un deuxième système de couplage 13 (crabot, synchroniseur, ou autre type de coupleur progressif ou non). L'arbre secondaire 10 porte également un pignon fixe 14 et un pignon de descente 15 vers un différentiel 16 relié aux roues du véhicule.

Comme indiqué plus haut, le premier moyen de couplage 5 peut occuper au moins trois positions dans lesquelles :

- le moteur thermique est découplé de la chaîne cinématique reliant la machine électrique 7 aux roues (baladeur au centre comme sur les figures 1, 2 et 3),
- le moteur thermique entraîne les roues avec ou sans l'appoint de la machine électrique (baladeur à gauche), et
- le moteur thermique et la machine électrique 7 sont couplés de manière à additionner en direction des roues leurs couples respectifs (baladeur à droite).

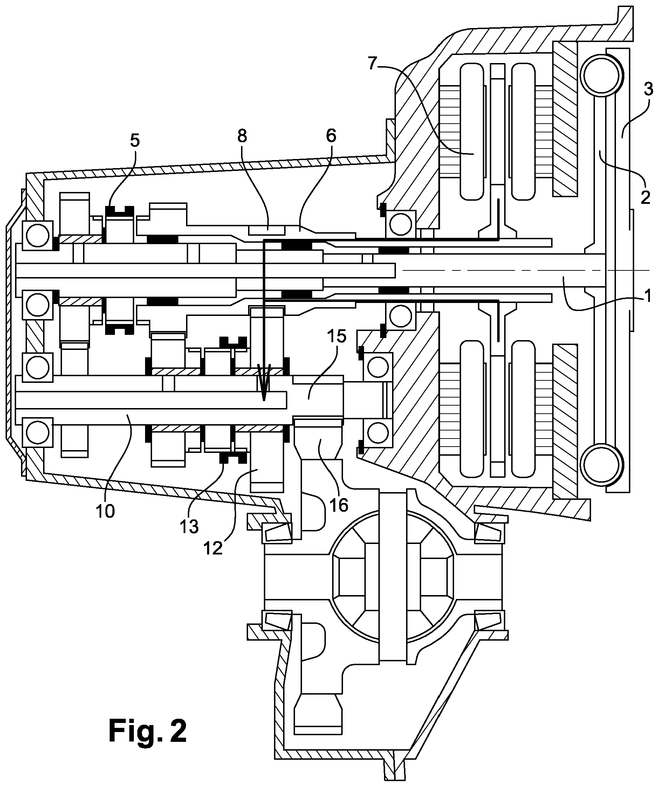

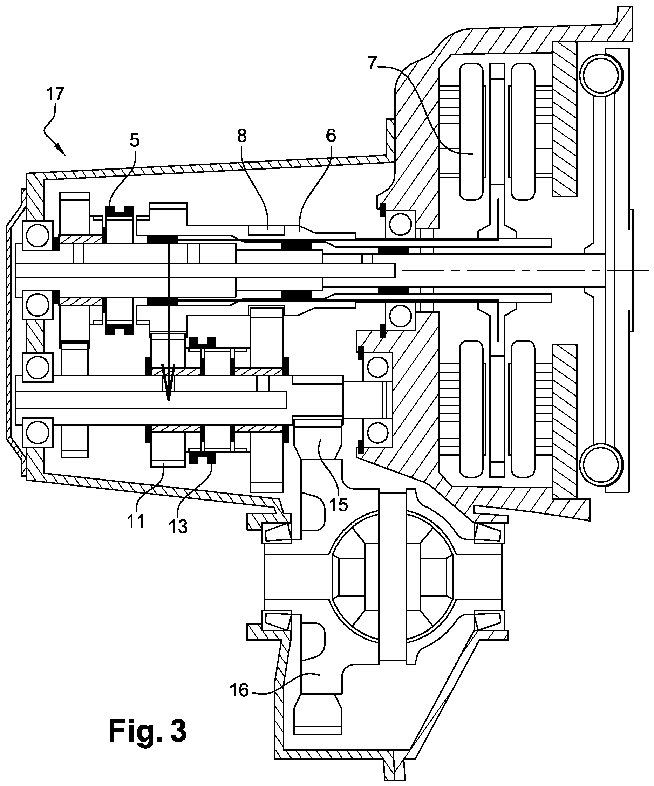

En mode électrique (cf. figures 2 et 3), la machine électrique entraîne l'arbre primaire creux 6, tandis que l'arbre plein ne reçoit aucun couple du moteur thermique (position 1). La boîte dispose de deux rapports électriques dits « ville » et « route », selon que le couple descend de l'arbre secondaire 10 par les pignons fixes 8 ou 9. Pour passer de l'un à l'autre de ces deux rapports, la boîte dispose du deuxième système de couplage 13. En l'absence d'anneaux de synchronisation, un système de couplage par crabotage de baladeur sur les pignons nécessite un contrôle précis du régime primaire par la machine électrique, afin d'éviter les à coups de couple.

Par la publication FR 2 933 247, on connaît un procédé d'accouplement entre un arbre d'une machine électrique et un arbre de roues pour véhicule électrique ou hybride. Le procédé décrit comporte les étapes suivantes :

- on fournit à la machine électrique une consigne de régime correspondant à la vitesse de l'arbre de roues, au rapport de démultiplication près, entre l'arbre de la machine électrique et l'arbre de roues,
- lorsque la vitesse de l'arbre de la machine électrique atteint un seuil calibrable, on lui applique un couple nul, et on actionne un dispositif de synchronisation mécanique, de manière à égaliser la vitesse de l'arbre de la machine électrique avec la vitesse de l'arbre lié aux roues, et
- dès que la vitesse de l'arbre de la machine électrique est égale à la vitesse de l'arbre lié aux roues (au rapport de démultiplication près), on effectue le crabotage.

Selon cette méthode, la machine électrique est pilotée dans un premier temps pour atteindre une vitesse proche, mais pas exactement égale, à celle de l'arbre lié aux roues ; un dispositif de synchronisation termine ensuite l'égalisation des vitesses entre les deux arbres, puis le crabotage final du rapport de vitesse est effectué.

La présente invention vise à se passer de synchroniseur mécanique.

Dans ce but, elle propose de maintenir le pilotage de la machine électrique jusqu'à l'égalisation totale des vitesses de l'arbre de la machine électrique et de l'arbre lié aux roues, au rapport de démultiplication près.

Elle prévoit à cet effet que La source d'énergie soit pilotée pour produire un signal de commande du couple de référence $T_1^{ref}$, égal au couple minimum transmissible minimiser, l'écart $\omega_2 K - \omega_1$ entre le régime primaire $\omega_1$ et le régime secondaire $\omega_2$ multiplié par le rapport de réduction ($K$), lors de l'accouplement du pignon concerné sur son arbre.

Le signal de commande de couple de référence $T_1^{ref}$ est contrôlé par le renvoi en boucle d'un terme de correction, sur l'écart des régimes primaire et secondaire $\omega_2 K - \omega_1$.

La présente invention sera mieux comprise à la lecture de la description suivante d'un mode de réalisation non limitatif de celle-ci, en se reportant aux dessins annexés, sur lesquels :

- les figure 1, 2 et 3 montrent la chaîne cinématique d'une transmission hybride au neutre et sur ses deux rapports électriques, et
- La figure 4 illustre le pilotage proposé.

Sur la figure 2, le premier système de couplage 5 est ouvert, tandis que le deuxième système de couplage 13 est fermé de manière à solidariser le pignon fou du rapport court 12 avec l'arbre secondaire 10. La transmission est en mode électrique sur le rapport court, ou premier rapport de marche avant. Le couple fourni par la machine électrique à l'arbre primaire creux 6 descend par le premier pignon fixe 8 sur le pignon fou 12. Le système de couplage 13 lie en rotation le pignon 12 et l'arbre 10. Le couple descend de la ligne secondaire sur le différentiel 16 par le pignon 15.

Sur la figure 3, le premier système de couplage 5 est toujours ouvert (position 1), tandis que le deuxième système de couplage 13 est fermé, de manière à solidariser le pignon fou du rapport intermédiaire 11 avec l'arbre secondaire 10. La transmission est en mode électrique sur le rapport intermédiaire, ou deuxième rapport de marche avant. Le couple fourni par la machine électrique 7 à l'arbre primaire creux 6, descend par le deuxième pignon fixe 9 sur le pignon fou 11. Le système de couplage 13 lie en rotation le pignon 11 et l'arbre 10. Comme sur la figure 2, le couple descend de la ligne secondaire sur le différentiel 16 par le pignon 15.

Comme indiqué plus haut, le problème rencontré sur cette boîte, est de synchroniser les régimes des deux arbres 6 et 10, avant d'entamer la phase de l'accouplement des deux arbres par crabotage de pignons. Lorsque le coupleur 5 n'est pas pourvu d'anneaux de synchronisation. Il s'agit donc de synchroniser, sans organe de synchronisation mécanique, un pignon sur un arbre de boîte de vitesses de véhicule à arbres parallèles comportant au moins un arbre primaire relié à une source d'énergie, un arbre secondaire entraîné par l'arbre primaire pour engager un rapport de transmission. Cette synchronisation doit être complètement transparente pour le conducteur, et s'opérer tout en continuant à satisfaire sa demande de couple. Ce problème se pose en particulier lors de passages entre les deux rapports électriques, qui s'effectuent en rupture de couple par le crabotage des pignons 8 et 9 sur l'arbre secondaire 10.

Dans la boîte de vitesses illustrée par les figures 1 à 3, $\omega_1$ est le régime de l'arbre lié à la source d'énergie, c'est-à-dire l'arbre primaire creux lié à la machine électrique 7, et $\omega_2$ est le régime de l'arbre lié aux roues, c'est-à-dire l'arbre secondaire 10.

En supposant qu'à l'état initial, les deux arbres sont complètement désaccouplés, et en appliquant le principe fondamental de la mécanique, on obtient le modèle dynamique suivant :

- pour l'arbre primaire : $J_1 \dot{\omega}_1 = T_1 + T_{d1}$, et
- pour l'arbre secondaire : $J_2 \dot{\omega}_2 = T_{d2}$,
  équations fondamentales de la dynamique dans lesquelles $J_1$ est l'inertie ramenée à l'arbre primaire, $J_2$ l'inertie ramenée sur l'arbre secondaire, et $Td_1$ et $Td_2$ les couples résistants sur ces arbres, qui sont des entrées exogènes inconnues.

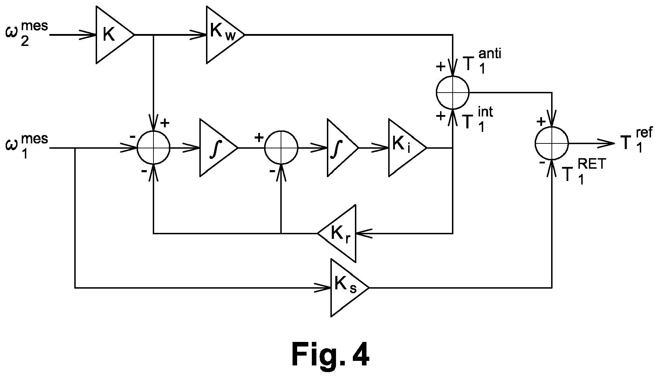

Le calcul de la figure 4 a pour objet de produire un signal de commande qui permet la synchronisation des régimes $\omega_2$ et $\omega_1$, c'est-à-dire la condition $\omega_2^{mes} K = \omega_1^{mes}$, où $K$ est le rapport de réduction entre la source d'énergie et le l'arbre secondaire, de manière à satisfaire les conditions d'un parfait accouplement entre le baladeur et les pignons.

Le résultat de ce calcul est un signal de commande de couple de référence « $T_1^{ref}$ », pour la machine électrique 7, qui permet de synchroniser la vitesse $\omega_1$ de l'arbre primaire 6, à la vitesse $\omega_2$ de l'arbre secondaire 10, au rapport de démultiplication $K$ près.

Conformément à l'invention, la source d'énergie est donc pilotée pour produire le signal de commande du couple de référence $T_1^{ref}$, égal au couple minimum transmissible pour minimiser l'écart $\omega_2 K - \omega_1$ entre le régime primaire $\omega_1$ et le régime secondaire $\omega_2$ multiplié par le rapport de réduction K, lors de l'accouplement du pignon concerné sur son arbre.

Pour produire le signal de référence « $T_1^{ref}$ », il faut d'abord multiplier le régime mesuré $\omega_2^{mes}$ sur l'arbre secondaire 10 par un premier gain $K$, qui est le rapport de réduction entre la source d'énergie et le l'arbre secondaire 10, afin de pouvoir le comparer au régime mesuré $\omega_1^{mes}$ de l'arbre primaire 6. Une double intégration de l'écart des régimes $\omega_2 K - \omega_1$ et son produit par un gain $Ki$, donne une « action intégrale $T_1^{int}$ ». Le produit $\omega_2^{mes} . K_w$ fournit une valeur d'anticipation « $T_1^{anti}$ ». Le régime primaire $\omega_1^{mes}$ est multiplié par un troisième gain $K_s$ pour fournir un retour d'état « $T_1^{ret}$ ». Les signaux engendrés par l'action intégrale « $T_1^{int}$ », l'anticipation « $T_1^{anti}$ » et le retour d'état « $T_1^{ret}$ » sont sommés. Une originalité de ce dispositif réside dans le retour « $K_r T_1^{int}$ », sur le terme de comparaison des régimes. Le signal de commande de couple de référence $( T_1^{ref} )$ est ainsi contrôlé par le renvoi en boucle d'un terme de correction, sur l'écart des régimes primaire et secondaire $(\omega_2 K - \omega_1)$. Le terme de correction de l'écart des régimes $\omega_2 K - \omega_1$ est proportionnel à $T_1^{int}$. Cette boucle garantit que, quand les régimes sont synchronisés, c'est-à-dire quand $\omega_2^{mes} K = \omega_1^{mes}$, le couple $T_1^{ref}$ est le minimum qu'on puisse transmettre pour y parvenir, même lorsque le régime secondaire varie, c'est-à-dire lorsque : $\dfrac{d\omega_2^{mes}}{dt} \neq 0$.

Le signal de commande de couple « $T_1^{ref}$ », pour la machine électrique, qui est le résultat calcul de la figure 4 est basé sur la somme $K_w . K . \omega_2 - K_s . \omega_1 + T_1^{int}$, où $K_w$ et $K_S$ sont des constantes. Il est donné par la somme $K_w . K . \omega_2 - K_s . \omega_1 + T_1^{int}$, où $T_1^{int}$ est un terme d'intégration du régime primaire $\omega_1$. Compte tenu des couples résistants $T_{d1}$ et $T_{d2}$, on peut écrire :

$$J_1 \frac{d\omega_1}{dt} = K_w K \omega_2 - K_s \omega_1 + T_1^{int} + T_{d1}$$

$$J_2 \frac{d\omega_2}{dt} = T_{d2}$$

Et de la figure 4, on obtient :

$$\frac{d^2 T_1^{int}}{dt^2} + K_i K_r \left( \frac{d T_1^{int}}{dt} + T_1^{int} \right) = K_i \left( K \omega_2 - \omega_1 \right)$$

Les constantes $K_w$ et $K_S$ sont fixées de manière à assurer la stabilité du signal de couple de référence $T_1^{ref}$. Pour calculer les gains $K_r$, $K_S$, $K_w$ et $K_i$, il convient de poser les conditions de stabilité globale qui sont requises pour le signal de commande et celles du cahier des charge, c'est-à-dire les temps de réponse (le temps nécessaire au régime

$\omega_1$ pour atteindre 95% de $K\omega_2$) et le dépassement (la valeur max supérieur à la valeur $K\omega_2$).

En conclusion, la stratégie mise en oeuvre par l'invention permet de minimiser le couple au coupleur lors de la phase de l'accouplement suivant la synchronisation. L'écart de régime diminue très rapidement pour arriver à une valeur d'environ 30 tours par minute, qui permet de réaliser l'accouplement sans à-coup. Le procédé permet ainsi de rendre la phase suivante d'accouplement des deux arbres aussi transparente que possible pour l'utilisateur, en dépit de la reprise de couple, c'est-à-dire avec le moins d'à-coup de couple possible. Il permet notamment de gérer des suivis de trajectoire de type rampe, correspondant aux cas défavorables de freinage appuyé. Enfin, l'élimination des à-coups de couple limite l'usure des pièces mécaniques du système d'accouplement.

## Revendications

1. Procédé de synchronisation d'un pignon sur un arbre de boîte de vitesses de véhicule à arbres parallèles comportant au moins un arbre primaire relié à une source d'énergie, un arbre secondaire entraîné par l'arbre primaire pour transmettre le couple moteur aux roues sur plusieurs rapports de transmission, et au moins un moyen de couplage d'un pignon sur son arbre pour engager un rapport de transmission sans organes de synchronisation mécanique, où la source d'énergie est pilotée pour produire le signal de commande du couple de référence $(T_1^{ref})$, qui est égal au couple minimum transmissible pour minimiser l'écart $(\omega_2 K - \omega_1)$ entre le régime primaire $(\omega_1)$ et le régime secondaire $(\omega_2)$ multiplié par le rapport de réduction $(K)$, **caractérisé en ce que** le signal de commande de couple de référence $(T_1^{ref})$ est donné par la somme $(K_w . K . \omega_2 - K_s . \omega_1 + T_1^{int} + T_1^{int})$, où $(T_1^{int}$ est une action intégrale résultant de la double intégration de l'écart des régimes primaire et secondaire $(\omega_2 K - \omega_1)$ et où $(K_w)$ et $(K_S)$ sont des constantes, et **en ce que** ce signal est contrôlé par le renvoi en boucle d'un terme de correction sur l'écart des régimes primaire et secondaire $(\omega_2 K - \omega_1)$.

2. Procédé de synchronisation selon la revendication 1, **caractérisé en ce que** les constantes $(K_w)$ et $(K_S)$ sont fixées de manière à assurer la stabilité du signal de couple de référence $(T_1^{ref})$.

3. Procédé de synchronisation selon la revendication 1 ou 2 **caractérisé en ce que** le terme de correction de l'écart des régimes $(\omega_2 K - \omega_1)$ est proportionnel à $(T_1^{int})$.

## Patentansprüche

1. Verfahren zur Synchronisierung eines Zahnrads auf einer Welle eines Fahrzeugschaltgetriebes mit parallelen Wellen, umfassend mindestens eine Primärwelle, die mit einer Energiequelle verbunden ist, eine Sekundärwelle, die von der Primärwelle angetrieben wird, um das Motordrehmoment über mehrere Übersetzungsverhältnisse zu den Rädern zu übertragen, und mindestens ein Mittel zum Kuppeln eines Zahnrads auf seiner Welle, um ein Übersetzungsverhältnis ohne Organe zur mechanischen Synchronisierung einzulegen, wobei die Energiequelle angesteuert wird, um das Signal zum Steuern des Referenzdrehmoments $(T_1^{ref})$ zu erzeugen, das gleich dem kleinsten übertragbaren Drehmoment ist, um die Abweichung $(\omega_2 K - \omega_1)$ zwischen der Primärdrehzahl $(\omega_1)$ und der Sekundärdrehzahl $(\omega_2)$, multipliziert mit dem Untersetzungsverhältnis $(K)$, zu minimieren, **dadurch gekennzeichnet, dass** das Signal zum Steuern des Referenzdrehmoments $(T_1^{ref})$ durch die Summe $(K_w . K . \omega_2 - K_s . \omega_1 + T_1^{int})$ gegeben ist, wobei $(T_1^{int})$ eine Integralaktion ist, die aus der doppelten Integration der Abweichung der Primär- und Sekundärdrehzahlen $(\omega_2 K - \omega_1)$ resultiert, und wobei $(K_w)$ und $(K_s)$ Konstanten sind, und dass dieses Signal durch das Zurückschleifen eines Korrekturterms auf die Abweichung der Primär- und Sekundärdrehzahlen $(\omega_2 K - \omega_1)$ kontrolliert wird.

2. Verfahren zur Synchronisierung nach Anspruch 1, **dadurch gekennzeichnet, dass** die Konstanten $(K_w)$ und $(K_S)$

so festgelegt sind, dass die Stabilität des Referenzdrehmomentsignals $(T_1^{ref})$ gewährleistet ist.

3. Verfahren zur Synchronisierung nach Anspruch 1 oder 2, **dadurch gekennzeichnet, dass** der Korrekturterm der Abweichung ($\omega_2 K - \omega_1$) proportional zu $(T_1^{int})$ ist.


**Claims**

1. Method of synchronizing a gear on a shaft of a parallel-shaft vehicle gearbox comprising at least one primary shaft connected to a power source, a secondary shaft driven by the primary shaft to transmit the motive torque to the wheels over several transmission ratios, and at least one means of coupling a gear to its shaft in order to engage a transmission ratio without mechanical synchronizing members, in which the power source is made to operate in such a way as to produce the reference torque control signal $(T_1^{ref})$, which reference torque is equal to the minimum transmittable torque in order to minimize the discrepancy ($\omega_2 K - \omega_1$) between the primary speed ($\omega_1$) and the secondary speed ($\omega_2$) multiplied by the reduction ratio (K), **characterized in that** the reference torque control signal $(T_1^{ref})$ is given by the sum ($K_w.K.\omega_2 - K_s \cdot \omega_1 + T_1^{int}$), where $(T_1^{int})$ is an integral action resulting from the double integration of the discrepancy between the primary and secondary speeds ($\omega_2 K - \omega_1$) and where ($K_w$) and ($K_s$) are constants, and **in that** this signal is controlled by feeding back a correction term into the discrepancy between the primary and secondary speeds ($\omega_2 K - \omega_1$).

2. Synchronizing method according to Claim 1, **characterized in that** the constants ($K_w$) and ($K_s$) are fixed in such a way as to ensure the stability of the reference torque signal $(T_1^{ref})$.

3. Synchronizing method according to Claim 1 or 2, **characterized in that** the correction term for correcting the speeds discrepancy ($\omega_2 K - \omega_1$) is proportional to $(T_1^{int})$.

**Fig. 1**

**Fig. 2**

**Fig. 3**

**Fig. 4**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- DE 102006019239 A1

- FR 2933247